Europäisches Patentamt

European Patent Office

Office européen des brevets

(11) Veröffentlichungsnummer : **0 050 231**
**B1**

(12) **EUROPÄISCHE PATENTSCHRIFT**

(45) Veröffentlichungstag der Patentschrift :
21.11.85

(21) Anmeldenummer : 81107522.5

(22) Anmeldetag : 22.09.81

(51) Int. Cl.⁴ : **H 01 H 1/02, H 01 H 35/24,
G 01 L 1/20**

(54) **Widerstandswertveränderliches Schaltorgan.**

(30) Priorität : 17.10.80 DE 3039256

(43) Veröffentlichungstag der Anmeldung :
28.04.82 Patentblatt 82/17

(45) Bekanntmachung des Hinweises auf die Patenterteilung : 21.11.85 Patentblatt 85/47

(84) Benannte Vertragsstaaten :
AT DE FR GB NL SE

(56) Entgegenhaltungen :
DE-A- 2 045 385
DE-A- 2 752 540
DE-A- 3 023 621
US-A- 3 386 067

(73) Patentinhaber : BOSCH-SIEMENS HAUSGERÄTE
GMBH STUTTGART
Hochstrasse 17
D-8000 München 80 (DE)

(72) Erfinder : Waigand, Helmut, Dipl.-Ing.
Traunstrasse 18d .
D-8221 St. Georgen (DE)

Jouve, 18, rue St-Denis, 75001 Paris, France

**Beschreibung**

Die vorliegende Erfindung bezieht sich auf ein widerstandsveränderliches Schaltorgan, welches durch Druckbelastung für eine nachgeschaltete elektrische Auswerteschaltung als in seinem Widerstandswert druckabhängig stetig veränderlicher Meßfühler einen Schaltvorgang auslöst, unter Verwendung einer elastisch bei ansteigender Krafteinwirkung verformbaren Schicht aus Elastomer-Substanz, in welcher Partikel aus leitendem Material eingebettet sind.

Es ist hinlänglich bekannt, Elastomere, z. B. Silikon-Kautschuk, mit Partikeln aus leitendem Material zu versehen, um diese Substanz für Schalterzwecke zu verwenden (DE-A-20 45 385 und DE-A-22 61 683). Als elektrisch leitfähiges Material wird normalerweise Ruß oder ein Metallpulver verwendet. Der Vorteil dieser bekannten Anordnungen besteht darin, daß damit besonders funktionssichere konstruktive Gestaltungen und ein hohes Widerstandsverhältnis zwischen dem Ein- und dem Ausschaltezustand zu erzielen ist. Darüber hinaus ist es auch bekannt, derartige mit elektrisch leitenden Partikeln durchsetzte Elastomer-Schichten dazu zu verwenden, um Schaltelemente zu kontaktieren. Auch in diesem Falle wird die Tatsache genutzt, daß durch die Elastizität der Elastomer-Substanz eine sichere Kontaktgabe erfolgt und durch die entsprechende Anreicherung mit elektrisch leitenden Partikeln der Übergangswiderstand einerseits im wesentlichen gleich bleibt und andererseits möglichst niedrig ist. Es ist aber auch bekannt, daß eine gewisse Abhängigkeit von der einwirkenden Betätigungskraft zum sich auswirkenden Widerstandswert dieser mit elektrisch leitenden Partikeln durchsetzten Elastomer-Substanzen besteht (Markt und Technik Nr. 37 vom 17. September 1979, Seite 84). Die bekannten Kennlinien zeigen einen Verlauf der Widerstands/Kraftbeziehung mit einem im wesentlichen parallel zur Widerstandsachse verlaufenden Kurvenzweig, welcher im Bereich oberhalb des Widerstandswertes 0 in einen Kurvenzweig parallel zur Kraftachse relativ schnell umgeleitet wird. Dieser Kurvenverlauf kommt dem bekannten Anwendungszweck als im wesentlich binäres Schaltorgang entgegen.

Weiterhin ist es bekannt (US-A-3 386 067), druckabhängig widerstandsveränderliche Schaltorgane dazu zu verwenden, um eine Last, beispielsweise eine ohmsche Last in Form einer Glühlampe oder einen Motor in Abhängigkeit von der auf dieses Schaltorgan ausgeübten Kraft unterschiedlich mit Strom zu versorgen. Bei dieser Anordnung wird ebenfalls die Widerstandsänderung bei unterschiedlicher Pressung des mit elektrischen Partikeln durchsetzten Elastomer-Materials genutzt. Da die unterschiedlichen Kräfte eine Volumen-Verformung und -Pressung nach sich zieht, ergeben sich bezüglich der in das Verhältnis zur Druckänderung gesetzten Widerstandsänderung stark exponential verlaufende Kurven (z. B. DE-A-30 23 621). Um annäherungsweise lineare Proportionalitäten zu erreichen, ist es erforderlich, entsprechende Entzerrungs-Schaltungsmaßnahmen zu treffen.

Ausgehend von diesem Stande der Technik, ist es Aufgabe der vorliegenden Erfindung, ein durch Druckeinwirkung in seinem ohmschen Widerstandswert veränderliches Meßorgan bereitzustellen, mit Hilfe dessen es möglich ist, ohne hohen technischen Aufwand, d. h. insbesondere ohne hohen Aufwand für Entzerrungsmaßnahmen, elektrisch auswirkbare Kraftmessungen durchzuführen. Insbesondere soll eine im wesentlichen lineare Proportionalität zwischen Kraftänderung und Widerstandsänderung erzielt werden.

Ein widerstandsveränderliches Schaltorgan, das diesen Anforderungen gerecht wird, ist erfindungsgemäß dadurch gekennzeichnet, daß eine Schicht aus Elastomer-Substanz mit geringer Durchsetzung von elektrisch leitfähigen Partikeln einer leitfähigen Fläche als Gegenkontakt gegenüber angeordnet ist, wobei die dem Gegenkontakt zugewandte Grenzfläche der Elastomer-Schicht derart ausgebildet ist, daß der elektrische Übergangswiderstand zum Gegenkontakt bei Krafteinwirkung auf die Elastomer-Schicht veränderlich ist.

Im Gegensatz zu den bekannten Anordnungen, bei denen die Volumenpressung der mit elektrisch leitfähigen Partikeln durchsetzten Elastomer-Substanz eine stark exponential verlaufende Widerstandsänderung mit zumeist einem starken Kurvenknick nach sich zieht, tritt durch die geringe Durchsetzung der Elastomer-Substanz beim Anmeldungsgegenstand die Widerstandsänderung durch die Volumenpressung weniger in Erscheinung. Dagegen wird bei der Anordnung gemäß der vorliegenden Erfindung im wesentlichen die Veränderung des Widerstandswertes zwischen der Grenzschicht der Elastomer-Substanz und der dieser gegenüber angeordneten leitfähigen Gegenkontakt-Fläche genutzt. Damit eignet sich das erfindungsgemäße Schaltorgan bevorzugt zur Kraftmessung. Unter den Begriff Kraftmessungen fallen auch Gewichtsbestimmungen. Die Verwendung von Elastomeren hat den bekannten Vorteil, daß Umwelteinflüsse unter den normal auftretenden Bedingungen sich nicht nachteilig auf das Verhalten der Substanz auswirken. Das sich Elastomer-Materialien bekanntermaßen auch vorzüglich als Auflagen, z. B. für Behälter und Gefäße eignen, sind diese Auflagen bei deren Ausgestaltung in erfindungsgemäßer Weise als Gewichtsmeßfühler einsetzbar.

Nach einer anderen bevorzugten Weiterbildung der Erfindung ist das widerstandswertveränderliche Schaltorgan dadurch gekennzeichnet, daß eine mit elektrisch leitenden Partikeln durchsetzte Schicht aus Elastomer-Substanz zwei flächig angeordneten Gegenkontakten gegenüberliegt. Diese Anordnung weist zwei Übergangsflächen auf, wodurch ebenfalls ein günstiges Kraft-Weg-Verhalten erzielt wird. Darüberhinaus ist diese Anordnung als flaches Bauteil technisch gut herstellbar.

Es ergibt sich in diesem Zusammenhang auch die Möglichkeit, die aufvulkanisierte Schicht aus reiner Elastomer-Substanz mit einer ebenen Grundplatine aus elektrisch isolierendem Material zu vervulkanisieren. Dabei werden die Anschlußkontakte mit einvulkanisiert.

Nach einer bevorzugten Weiterbildung der Erfindung ist das widerstandswertveränderliche Schaltorgan dadurch gekennzeichnet, daß zwei mit elektrisch leitenden Partikeln durchsetzte Schichten aus Elastomer-Substanz, an denen jeweils ein Anschlußkontakt fest angeordnet ist, sich in einem flächigen Bereich gegenüberstehen. Da der Übergangswiderstand zwischen der mit leitenden Partikeln durchsetzten Schicht aus Elastomer-Substanz bei Krafteinwirkung besonders veränderlich ist, wirkt sich die zweiseitige Anordnung dieser Elastomer-Substanzen für Steuerzwecke besonders günstig aus.

Dieser Effekt wird noch verbessert dadurch, daß in einer bevorzugten Weiterbildung der Erfindung die sich gegenüberliegenden Flächen der mit elektrisch leitenden Partikeln durchsetzten Schichten aus Elastomer-Substanz gegeneinander verzahnt ausgestaltet sind.

Nach einer bevorzugten Ausgestaltung ist das erfindungsgemäße widerstandswertveränderliche Schaltorgan dadurch gekennzeichnet, daß der der Druckbelastung ausgesetzte Bereich der mit den elektrisch leitenden Partikeln durchsetzten Schicht aus Elastomer-Substanz mit einer Schicht aus reiner Elastomer-Substanz überzogen ist. Damit wird erreicht, daß die mit elektrisch leitenden Partikeln durchsetzte Schicht nach außen elektrisch isolierend abgeschirmt ist. Es bietet sich die Möglichkeit an, die beiden Elastomer-Schichten direkt miteinander zu vervulkanisieren.

Ausführungsbeispiele der Erfindung sind anhand der Zeichnung im folgenden näher beschrieben. Es zeigen :

Figur 1  eine Seitenansicht mit zwei Elastomer-Schichten,

Figur 2  diese Anordnung in einer Draufsicht,

Figur 3  eine weitere Anordnung mit einer Elastomer-Schicht in einer geschnittenen Seitenansicht,

Figur 4  eine Draufsicht auf diese Anordnung und

Figur 5  eine Druckfühleranordnung in einem Rohrverbindungsstück.

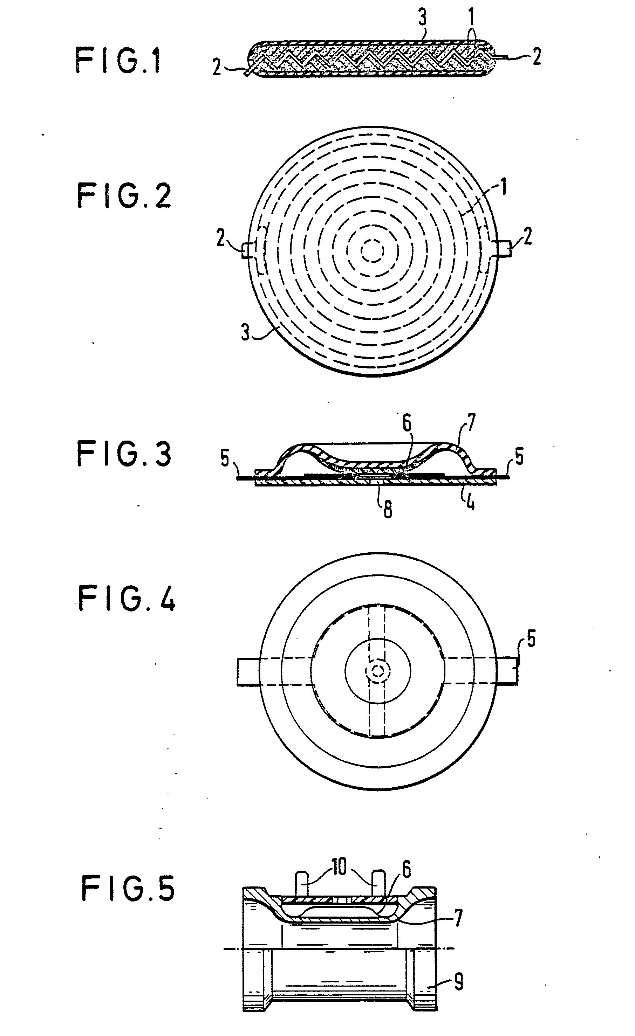

Gemäß den Figuren 1 und 2 sind zwei Schichten 1 aus mit elektrisch leitenden Partikeln durchsetzter Elastomer-Substanz angeordnet. Die elektrisch leitenden Partikel bestehen aus beispielsweise Ruß, Edel-Metall-Pulver oder Kupfer-Pulver. Die sich gegenüberliegenden Flächen der Elastomer-Schichten 1 sind gegeneinander verzahnt ausgebildet, sodaß eine größere Flächenerstreckung erzielt wird. Die beiden Elastomer-Schichten 1 sind mit Kupferkontaktanschlüssen 2 versehen, welche die Verbindung zur elektrischen Auswerteschaltung bilden. Auf die mit elektrisch leitenden Partikeln durchsetzten Elastomer-Schichten 1 sind Schichten 3 aus reinem Elastomer-Material aufvulkanisiert, um eine elektrische Isolation gegenüber der Umgebung zu erzeugen.

Gemäß dem Ausführungsbeispiel nach den Figuren 3 und 4 ist eine kupferkaschierte Leiterplatte 4 aus elektrisch isolierendem Material als Trägerplatte angeordnet, auf der durch bekannte Ätzverfahren Kontaktanschlüsse 5 ausgebildet sind. Den beiden Kontaktanschlüssen 5 gegenüber liegt eine Schicht 6 mit einer mit elektrisch leitenden Partikeln durchsetzten Elastomer-Substanz. Mit dieser ist eine weitere, darüberliegende Schicht 7 aus reiner Elastomer-Substanz vervulkanisiert, welche im Bereich ihrer Ränder auf die Schaltungsplatte 4 und die darauf angeordneten Kontakte 5 aufvulkanisiert ist. In der Mitte der Schaltungsplatte 4 ist eine Öffnung 8 vorgesehen, welche zum Druckausgleich dient.

Die Figur 5 zeigt in einer teilweise geschnittenen Seitenansicht ein Rohrverbindungsstück 9, in denen ein ähnlich der Ausführungsform gemäß den Figuren 3 und 4 ausgestaltetes Druck/Widerstandswandlerelement eingefügt ist. Die Anschlußkontakte 10 sind radial herausgeführt.

## Patentansprüche

1. Widerstandsveränderliches Schaltorgan, welches durch Druckbelastung für eine nachgeschaltete elektrische Auswerteschaltung als in seinem Widerstandswert druckabhängig stetig veränderlicher Meßfühler einen Schaltvorgang auslöst, unter Verwendung einer elastisch bei ansteigender Krafteinwirkung verformbaren Schicht aus Elastomer-Substanz, in welcher Partikel aus leitendem Material eingebettet sind, dadurch gekennzeichnet, daß eine Schicht (1, 6) aus Elastomer-Substanz mit geringer Durchsetzung von elektrisch leitfähigen Partikeln einer leitfähigen Fläche (1, 5) als Gegenkontakt gegenüber angeordnet ist, wobei die dem Gegenkontakt zugewandte Grenzfläche der Elastomer-Schicht derart ausgebildet ist, daß der elektrische Übergangswiderstand zum Gegenkontakt bei Krafteinwirkung auf die Elastomer-Schicht veränderlich ist.

2. Widerstandsveränderliches Schaltorgan nach Anspruch 1, dadurch gekennzeichnet, daß eine mit elektrisch leitenden Partikeln durchsetzte Schicht (6) aus Elastomer-Substanz zwei flächig angeordneten Gegenkontakten (5) gegenüberliegt.

3. Widerstandsveränderliches Schaltorgan nach Anspruch 2, dadurch gekennzeichnet, daß die Schicht (7) aus reiner Elastomer-Substanz mit einer ebenen Grundplatte (4) aus elektrisch isolierendem Material vervulkanisiert ist.

4. Widerstandsveränderliches Schaltorgan nach Anspruch 1, dadurch gekennzeichnet, daß zwei mit elektrisch leitenden Partikeln durchsetzte Schichten (1) aus Elastomer-Substanz, an denen jeweils ein Anschlußkontakt (2) fest angeordnet ist, sich in einem flächigen Bereich gegenüberstehen.

5. Widerstandsveränderliches Schaltorgan nach Anspruch 4, dadurch gekennzeichnet, daß die sich gegenüberliegenden Flächen der mit elektrisch leitenden Partikeln durchsetzten Schichten (1) aus Elastomer-Substanz gegeneinander verzahnt ausgebildet sind.

6. Widerstandsveränderliches Schaltorgan nach einem der Ansprüche 1 bis 5, dadurch gekennzeichnet, daß der der Druckbelastung ausgesetzte Bereich der mit elektrisch leitenden Partikeln durchsetzten Schicht (1, 6) aus Elastomer-Substanz mit einer Schicht (3, 7) aus reiner Elastomer-Substanz überzogen ist.

## Claims

1. Resistance variable switching element, releasing a switching operation by pressure for an electrical evaluating circuit connected at the outlet side as a sensor continually variable by pressure, under usage of a coating made of elastomer-substance elastically deformable with increasing force-influence and in which are embedded particles of a conductive material, characterized in that a coating (1, 6) of elastomer-substance with a smaller interspersion of electrically conducting particels is arranged against a conductive face (1, 5) as counter-contact, whereby the bounding surface turned towards to the counter-contact is variable according to force-influence on the elastomer-coating.

2. Resistance variable switching element according to claim 1, characterized in that a coating (6) made of elastomer-substance and embedded with electrically conducting particles lies opposite to two counter-contacts (5) flattendly arranged.

3. Resistance variable switching element according to claim 2, characterized in that the coating (7) made of pure elastomer-substance is vulcanized with a flat baseplate made of electrically insulating material.

4. Resistance variable switching element according to claim 1, characterized in that two coatings (1) made of elastomer-substance and embedded with electrically conducting particles, stand opposite in a flat area whereby on each coating is fixed a connecting contact.

5. Resistance variable switching element according to claim 4, characterized in that the opposite faces of the coatings (1) embedded with electrically conducting particles and made of elastomer-substances are serrated one to the other.

6. Resistance variable switching element according to one of the claims 1 to 5, characterized in that the area exposed the force-influence of the coating (1, 6) embedded with electrically conducting particles and made of elastomer substance is coated with a layer of pure elastomer-substance.

## Revendications

1. Organe de commutation à résistance variable qui déclenche une opération de commutation par la charge en pression pour un circuit d'évaluation électrique aval, en tant que capteur de mesure à valeur de résistance variant en permanence en fonction de la pression, avec mise en œuvre d'une couche en une substance élastomère élastiquement déformable sous l'action d'une force croissante, et dans laquelle sont noyées des particules métalliques d'un matériau conducteur, caractérisé par le fait qu'une couche (1, 6) en une substance élastomère faiblement chargée en particules électriquement conductrices est située, en tant que contact antagoniste, en face d'une surface conductrice (1, 5), la surface limite de la couche élastomère qui est tournée vers le contact antagoniste étant réalisée de telle façon que la résistance électrique de contact par rapport au contact antagoniste est variable sous l'effet de la force sur la couche élastomère.

2. Organe de commutation à résistance variable selon la revendication 1, caractérisé par le fait qu'une couche en une substance élastomère (6) chargée avec des particules conductrices se situe en face de deux contacts antagonistes (5) disposées selon des plans.

3. Organe de commutation à résistance variable selon la revendication 2, caractérisé par le fait que la couche (7) faite avec une substance élastomère pure est vulcanisée avec une plaque de base plane (4) faite avec un matériau électriquement isolant.

4. Organe de commutation à résistance variable selon la revendication 1, caractérisé par le fait que deux couches (1) d'une substance élastomère, chargées de particules électriquement conductrices et à chacune desquelles est associé de façon fixe un contact de branchement (2), se situent l'une en face de l'autre dans une zone plane.

5. Organe de commutation à résistance variable selon la revendication 4, caractérisé par le fait que les surfaces opposées des couches (1) en une substance élastomère et chargées avec des particules électriquement conductrices sont réalisées avec des dentures enchevêtrées.

6. Organe de commutation à résistance variable selon l'une des revendications 1 à 5, caractérisé par le fait que la partie de la couche (1, 6) en une substance élastomère, qui est chargée avec des particules électriquement conductrices et qui est soumise à la charge en pression, est revêtue d'une couche (3, 7) en une substance élastomère pure.

**FIG.1**

**FIG.2**

**FIG.3**

**FIG.4**

**FIG.5**